# EUROPÄISCHE PATENTSCHRIFT

(11) **EP 4 263 241 B1**
(45) Veröffentlichungstag und Bekanntmachung des Hinweises auf die Patenterteilung: **08.01.2025**
(21) Anmeldenummer: 21823178.5
(22) Anmeldetag: 12.11.2021
(51) Int. Cl.: B60C 11/13

(54) **LAUFSTREIFENPROFIL EINES FAHRZEUGLUFTREIFENS**
TREAD PROFILE OF A PNEUMATIC VEHICLE TIRE
SCULPTURE DE BANDE DE ROULEMENT DE PNEU DE VÉHICULE

(30) Priorität: 16.12.2020 DE 102020216024
(43) Veröffentlichungstag der Anmeldung: 25.10.2023
(73) Patentinhaber: Continental Reifen Deutschland GmbH, 30175 Hannover (DE)
(72) Erfinder: BEHR, Ulrich, 30165 Hannover (DE)
(74) Vertreter: Continental Corporation
(86) Internationale Anmeldenummer: PCT/DE2021/200187
(87) Internationale Veröffentlichungsnummer: WO 2022/128006

(56) Entgegenhaltungen:
- EP-A1- 3 663 105
- DE-A1- 102016 221 953
- DE-A1- 102017 202 939
- JP-A- 2004 224 268
- US-B2- 10 639 941

## Beschreibung

Die Erfindung betrifft ein Laufstreifenprofil eines Fahrzeugluftreifens mit über den gesamten Umfangs des Fahrzeugluftreifens erstreckten und in Umfangsrichtung U des Fahrzeugluftreifens ausgerichteten Profilbändern, wobei ein Profilband in einer Reifenschulter und in axialer Richtung A zur Reifenmitte hin benachbart ein weiteres Profilband ausgebildet ist, die durch eine Umfangsrille voneinander getrennt sind, wobei die Umfangsrille in radialer Richtung R nach innen hin von einem Rillengrund und die Profilbänder in radialer Richtung R nach außen hin von einer radial äußeren Oberfläche, welche die Bodenkontaktfläche bildet, und in axialer Richtung A zur Umfangsrille jeweils durch eine Profilbandflanke, die sich ausgehend vom Rillengrund in radialer Richtung R nach außen bis zur radial äußeren Oberfläche erstreckt und die zum Profilband hinweisende Rillenwand der Umfangsrille bildet, begrenzt sind, wobei längs der Erstreckung der Umfangsrille über den Umfang des Fahrzeugluftreifens hinweg verteilt angeordnet im Rillengrund der Umfangsrille erste und zweite Erhebungen des Rillengrundes ausgebildet sind, die sich quer zur Umfangsrille hinweg erstrecken und dabei die beiden Profilbänder verbinden, wobei die Erhebungen längs ihrer Erstreckung durch die Umfangsrille hinweg einen Neigungswinkel α zur axialen Richtung A einschließen, wobei erste in der Umfangsrille ausgebildete Erhebungen eine entgegengesetzte Steigungsrichtung zu zweiten in der Umfangsrille ausgebildeten Erhebungen aufweisen.

Derartige Laufstreifenprofile sind bekannt. So ist beispielsweise aus der US 10,639,941 B2 die Ausbildung ein derartiges Luftreifenprofil bekannt, bei dem die Profilbänder Umfangsrippen sind, welche durch eine Umfangsrille getrennt sind. In der Umfangsrille sind dabei über den Umfang des Fahrzeugluftreifens verteilt hintereinander angeordnet jeweils Erhebungen ausgebildet, die sich quer zur Erstreckungsrichtung der Umfangsrille hindurch erstrecken und die beiden Umfangsrippen miteinander verbinden.

Dabei sind einige der Erhebungen mit ihrer Erstreckung durch die Umfangsrille mit anderer Erstreckungsrichtung ausgebildet als andere Erhebungen. Diese Ausbildung bewirkt eine Versteifung des ohnehin durch die Umfangsrippen schon steif ausgebildeten Fahrzeugluftreifens. Bei dem steifen Laufstreifenprofil wird darüber hinaus die Wasserabfuhr aus den Umfangsrillen und damit aus dem Laufstreifenprofil durch die beiderseits der Umfangsrillen jeweils ausgebildeten Umfangsrippen gerade auch im zentralen an die Schulterrippe angrenzenden Bereich des Laufstreifenprofiles unerwünscht begrenzt. Die hohe Steifigkeit mit begrenzter Wasserabfuhr kann verstärkt Aquaplaning-Eigenschaften beeinträchtigen. Die bereits durch die nebeneinander angeordnete Umfangsrippen auch im zentralen, an die Schulterrippe anschließenden Laufstreifenabschnitt schon bedingte hohe Versteifung wird durch die zusätzlich bewirkten Versteifungen mittels der Erhebungen noch erhöht, wodurch der Rollwiderstand des Reifens negativ beeinflusst wird.

Aus der JP 2004 224268 A ist ein Fahrzeugluftreifen mit einem profilierten Laufstreifen bekannt, welcher zentrale Profilblockreihen aufweist, deren Profilblöcke jeweils mit zwei Erhebungen über eine die beiden Profilblockreihen voneinander trennende Umfangsrille hinweg miteinander verbunden sind. Die Erhebungen erstrecken sich ausschließlich in Querrichtung und sind nicht geneigt. Die DE 10 2016 221953 A1 offenbart einen Fahrzeugluftreifen mit einem profilierten Laufstreifen mit zumindest zwei durch eine Umfangsrille voneinander getrennten Profilbändern, wobei in dieser Umfangsrille vom Rillengrund ausgehend erhabene Stützkörper ausgebildet sind, die sich stegförmig von der Profilbandflanke des einen Profilbandes quer zur Umfangsrichtung durch die Umfangsrille bis zur Profilbandflanke des zweiten Profilbandes erstrecken und derart die Profilbänder miteinander verbinden. Dadurch soll eine axiale Versteifung über die Umfangsrille hinweg bei Erhalt guter Aquaplaning-Eigenschaften ermöglicht sein.

Die DE 10 2017 202939 A1 offenbart einen Fahrzeugluftreifen mit einem profilierten Laufstreifen mit Profilblockreihen mit durch Rillen begrenzten Profilblöcken, welche in Draufsicht T-Kreuzungen bilden. In den Kreuzungsbereichen der T-Kreuzungen der Rillen sind Vorsprünge positioniert, die an die der Einmündungen der einmündenden Rillen gegenüberliegenden Blockflanken angebunden sind. Diese Vorsprünge dienen als Steinauswerfer.

Die EP 3 663 105 A1 zeigt einen Fahrzeugreifen mit einem drehrichtungsgebundenen profilierten Laufstreifen mit zumindest zwei in Umfangsrichtung umlaufenden Profilbändern, die durch eine Umfangsrille voneinander getrennt sind. Die Profilbänder sind in axialer Richtung zur Umfangsrille hin durch Profilbandflanken begrenzt, wobei auf wenigstens einer dieser Profilbandflanken über den Umfang des Fahrzeugreifens verteilt hintereinander angeordnete steg- oder rippenförmige Versteifungselemente ausgebildet sind, welche sowohl an die Profilbandflanke als auch den Rillengrund angebunden sind. Ein Fahrzeugluftreifen mit einem derart ausgeführten Laufstreifen soll gute Griffeigenschaften auf trockener, nasser und schneebedeckter Straße aufweisen.

Der Erfindung liegt daher die Aufgabe zugrunde, ein Laufstreifenprofil eines Fahrzeugluftreifens mit hoher struktureller Steifigkeit zur Erzielung guter Handling-Eigenschaften bei verbesserten Rollwiderstandseigenschaften und Wasserabfluss zu ermöglichen.

Die Aufgabe wird erfindungsgemäß durch die Ausbildung eines Laufstreifenprofils eines Fahrzeugreifens mit über den gesamten Umfangs des Fahrzeugluftreifens erstreckten und in Umfangsrichtung U des Fahrzeugluftreifens ausgerichteten Profilbändern, wobei ein Profilband in einer Reifenschulter und in axialer Richtung A zur Reifenmitte hin benachbart ein weiteres Profilband ausgebildet ist, die durch eine Umfangsrille voneinander getrennt sind, wobei die Umfangsrille in radialer Richtung R nach innen hin von einem Rillengrund und die Profilbänder in radialer Richtung R nach außen hin von einer radial äußeren Oberfläche, welche die Bodenkontaktfläche bildet, und in axialer Richtung A zur Umfangsrille jeweils durch eine Profilbandflanke, die sich ausgehend vom Rillengrund in radialer Richtung R nach außen bis zur radial äußeren Oberfläche erstreckt und die zum Profilband hinweisende Rillenwand der Umfangsrille bildet, begrenzt sind, wobei längs der Erstreckung der Umfangsrille über den Umfang des Fahrzeugluftreifens hinweg verteilt angeordnet im Rillengrund der Umfangsrille erste und zweite Erhebungen des Rillengrundes ausgebildet sind, die sich quer zur Umfangsrille hinweg erstrecken und dabei die beiden Profilbänder verbinden, wobei die Erhebungen längs ihrer Erstreckung durch die Umfangsrille hinweg einen Neigungswinkel α zur axialen Richtung A einschließen, wobei erste in der Umfangsrille ausgebildete Erhebungen eine entgegengesetzte Steigungsrichtung zu zweiten in der Umfangsrille ausgebildeten Erhebungen aufweisen, gemäß den Merkmalen von Anspruch 1 gelöst, bei dem das in der Reifenschulter ausgebildete Profilband eine Umfangsrippe und das zur Reifenmitte hin benachbarte Profilband eine aus über den Umfang des Fahrzeugluftreifens hintereinander angeordneten und durch Querrillen voneinander getrennten Profilblockelementen ausgebildete Profilblockreihe ist, und bei dem längs der Erstreckung eines Profilblockes in der Umfangsrille je eine erste und eine zweite Erhebung ausgebildet ist, wobei jeweils eine erste Erhebung das in Drehrichtung des Fahrzeugreifens bei Vorwärtsfahrt ausgebildete Blockende und die zweite Erhebung den Blockanfang mit der Umfangsrippe verbindet.

Durch diese Ausbildung wird es ermöglicht, dass mit Hilfe der Querrillen des als Profilblockreihe ausgebildeten, zur Reifeninnenseite hin ausgebildeten Profilbandes Wasserabfluss gut ermöglicht wird. Dabei wird zusätzlich mit Hilfe der Querrillen ein Abplatten des zentralen, an die Umfangsrippe anschließenden Bereiches des Laufstreifenprofiles beim Durchlaufen des Reifenlatsches ermöglicht, wodurch die Rollwiderstandseigenschaften verbessert werden können. Die Ausbildung der Umfangsrippe in der Reifenschulter ist durch die hierdurch bedingte erhöhte Steifigkeit gerade in der für gute Handling-Eigenschaften wichtigen Reifenschulter.

Die Ausbildung mit den beiden Erhebungen unterschiedlich geneigter Erstreckungsrichtung jeweils im Anfangs- und Endbereich eines Profilblockelementes ermöglichen dabei eine gezielte zusätzliche Versteifung des Reifenprofiles im Bereich der Umfangsrille bis zu dem jeweils verbundenen Profilblockelement, wodurch die Handling-Eigenschaften zusätzlich verbessert werden können. Die paarweise Anordnung von gegenläufig gerichteten Erhebungen ermöglicht dabei eine Versteifung in beide Laufrichtungen des Reifens. Trotz zur Erzielung guter Handling-Eigenschaften hoher Steifigkeit in dem für die Handling-Eigenschaften wichtigen Reifenabschnitt werden somit verbesserte Rollwiderstandseigenschaften und verbesserter Wasserabfluss ermöglicht.

Besonders vorteilhaft ist die Ausbildung eines Laufstreifenprofils gemäß den Merkmalen von Anspruch 2, wobei die Neigungsrichtung der ersten Erhebung und die Neigungsrichtung der zweiten Erhebung jeweils derart gewählt sind, dass die Erhebung jeweils ausgehend von ihrer Schnittstelle mit der Profilbandflanke im Blockelement längs der Erstreckung durch die Umfangsrille hindurch bis zur Umfangsrippe mit ihrer Umfangsrichtungskomponente in Richtung der der Schnittstelle im Profilblockelement nächstgelegenen Querrille der Profilblockreihe ausgerichtet ist. Durch diese Ausbildung wird in einfacher Weise eine gezielte Anbindung der eher weich ausgebildeten Eckabschnitte des Blockelementes and die Umfangsrille und deren gezielte Versteifung ermöglicht, wodurch die Gesamtsteifigkeit sowie harmonischer Abrieb des Fahrzeugreifens weiter begünstigt werden können.

Besonders vorteilhaft ist die Ausbildung eines Laufstreifenprofils gemäß den Merkmalen von Anspruch 3, wobei die ersten und zweiten Erhebungen mit einer vom Rillengrund in radialer Richtung R nach außen gemessenen Erstreckungshöhe h mit h ≤ 0,5T ausgebildet ist, wobei T die in der Umfangsrille gemessene Profiltiefe des Fahrzeugreifens bildet, wobei insbesondere T mit 5mm≤T≤9mm ausgebildet ist. Dies ermöglicht in einfacher Weise eine gezielte wirkungsvolle Umsetzung guter Handling-Eigenschaften, guter Steifigkeit und Rollwiderstand bei gutem Wasserabfluss.

Besonders vorteilhaft ist die Ausbildung eines Laufstreifenprofils gemäß den Merkmalen von Anspruch 4, wobei die Umfangsrille mit einer in der radialen Position der radial äußeren Oberfläche der sie begrenzenden Profilbänder in axialer Richtung A des Fahrzeugreifens gemessenen Breite B ausgebildet ist, die schmaler ist als die Breite aller weiter zur Mitte des Reifens hin positioniert ausgebildeter Umfangsrillen. Diese Ausbildung ermöglicht besondere gezielte Versteifung des für gute Handling-Eigenschaften besonders wichtigen Schulterbereiches. Die gezielte Versteifung der Reifenschulter mit der Umfangsrippe einschließlich der angrenzenden Profilblockreihe ermöglicht maximale Kontaktfläche zur maximalen Kraftübertragung zu gewährleisten. Bei Einsatz in der Reifenaußenschulter ermöglicht diese Ausbildung somit die für sportliches Fahren gewünschte optimale Kraftübertragung, wodurch die Ausbildung gerade für Sportreifen besonders vorteilhaft ist.

Besonders vorteilhaft ist die Ausbildung eines Laufstreifenprofils gemäß den Merkmalen von Anspruch 5, wobei die Umfangsrille mit einer in der radialen Position der radial äußeren Oberfläche der sie begrenzenden Profilbänder mit einer in axialer Richtung A des Fahrzeugreifens gemessenen Breite B mit 3mm≤B≤10mm ausgebildet ist. Die Umfangsrille ist zur Umsetzung guter Aquaplaning-Eigenschaften breit genug und schmal genug, um gute Trocken-Handling-Eigenschaften umzusetzen.

Besonders vorteilhaft ist die Ausbildung eines Laufstreifenprofils gemäß den Merkmalen von Anspruch 6, wobei α mit 15°≤α≤45° ausgebildet ist. Die Ausbildung ermöglicht eine besonders verwindungssteife Umsetzung in einfacher Weise.

Besonders vorteilhaft ist die Ausbildung eines Laufstreifenprofils gemäß den Merkmalen von Anspruch 7, wobei die ersten und zweiten Erhebungen jeweils mit einer in Umfangsrichtung U des Fahrzeugluftreifens gemessenen maximalen Erstreckungslänge L mit 3mm≤L≤15mm ausgebildet sind. Hierdurch kann eine wirksame Umsetzung der Versteifung bei Sicherstellung eines hohen negativen Volumens (Void) im Bereich der Umfangsrille zur Aufnahme und Ableitung von Wasser ermöglicht werden.

Besonders vorteilhaft ist die Ausbildung eines Laufstreifenprofils gemäß den Merkmalen von Anspruch 8, wobei die zur Umfangrippe weisende Rillenwand, welche durch die zur Umfangsrille weisende Flanke der Umfangsrippe gebildet wird, jeweils in Erstreckungsrichtung der Umfangsrille erstreckten Erstreckungsabschnitten, welcher längs der radialen Erstreckung der Rillenwand ausgehend von der Erhebung bis zur radial äußeren Oberfläche der Umfangsrippe erstreckt ausgebildet sind, in den Schnittebenen, welche die Reifenachse aufweisen, jeweils mit einem ersten Neigungswinkel δ zur radialen Richtung R ausgebildet ist, wobei in den in Umfangsrichtung U zwischen zwei hintereinander angeordneten, benachbarten ersten Erstreckungsabschnitten die Rillenwand in den Schnittebenen, welche die Reifenachse aufweisen, längs ihrer radialen Erstreckung vom Rillengrund bis zur radial äußeren Oberfläche der Umfangsrippe mit einem zweiten Neigungswinkel γ zur radialen Richtung R ausgebildet ist mit γ <δ, wobei der Differenzwinkel β = (δ-y) mit 5°≤β≤20° gewählt ist. Hierdurch kann eine zusätzliche versteifende Abstützwirkung der Reifenschulter bereits in der Umfangsrille umgesetzt werden.

Besonders vorteilhaft zur besseren Entformbarkeit bei der Reifenherstellung ist die Ausbildung eines Laufstreifenprofils gemäß den Merkmalen von Anspruch 9, wobei die zur Profilblockreihe weisende Rillenwand, welche durch die zur Umfangsrille weisende Flanke der Profilblockreihe gebildet wird, längs ihrer Erstreckung über den Umfang des Fahrzeugreifens hinweg in den Schnittebenen, welche die Reifenachse aufweisen, längs ihrer radialen Erstreckung vom Rillengrund nach außen mit einem Neigungswinkel ε zur radialen Richtung R ausgebildet ist.

Die Erfindung wird im Folgenden an Hand der in den Figuren 1 bis 5 dargestellten Ausführungsbeispiele näher erläutert. Hierin zeigen
- Fig.1: einen Umfangsabschnitt eines Laufstreifenprofils eines Fahrzeugluftreifens für Personenkraftwagen (PKW),
- Fig.2: die Querschnittsdarstellung einer Umfangsrille des Laufstreifenprofils von Fig.1 in Schnittdarstellung gemäß Schnitt II-II von Fig.1,
- Fig.3: die Querschnittsdarstellung der Umfangsrille in Schnittdarstellung gemäß III-III von Fig.1,
- Fig.4: die Umfangsrille in Schnittdarstellung gemäß Schnitt IV-IV von Fig.1 und
- Fig.5: die Umfangsrille in Schnittdarstellung gemäß Schnitt V-V von Fig.1.

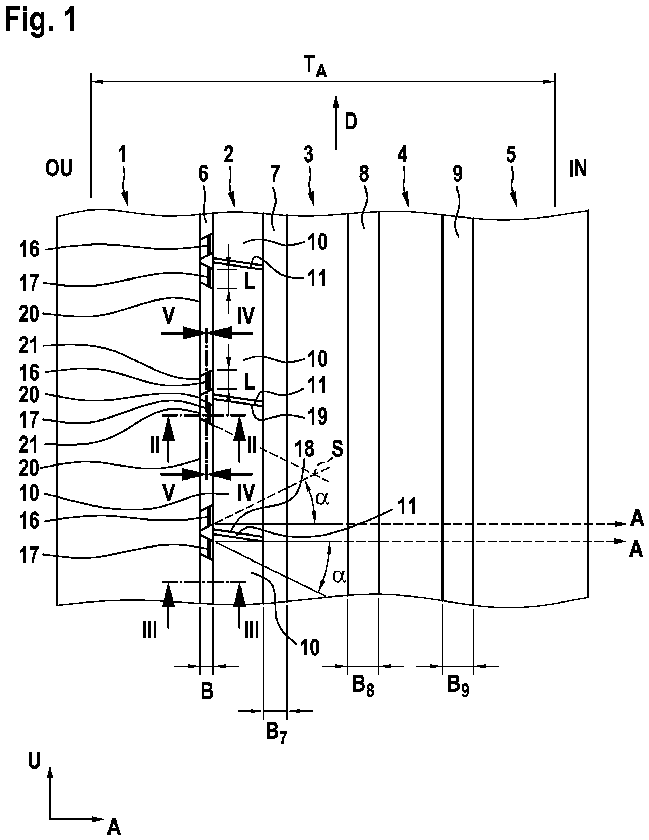

In Fig. 1 ist das Laufstreifenprofil des Fahrzeugluftreifens eines Personenkraftwagens (PKW) dargestellt, welches mit in axialer Richtung A des Fahrzeugluftreifens nebeneinander angeordneten und jeweils durch Umfangsrippen 6, 7, 8, 9 voneinander getrennt angeordneten Profilbändern ausgebildet ist. Die Profilbänder sind dabei zum Teil als Profilblockreihen bekannter Art und zum Teil als Umfangsrippen bekannter Art ausgebildet. Der dargestellte Fahrzeugluftreifen ist beispielsweise ein Sportreifen.

Im dargestellten Ausführungsbeispiel ist das Laufstreifenprofil aus in axialer Richtung A des Fahrzeugluftreifens nebeneinander angeordneter Umfangsrippe 1, Profilblockreihe 2, Umfangsrippe 3, Umfangsrippe 4 und Umfangsrippe 5 ausgebildet. Die Umfangsrippe 1 und die Profilblockreihe 2 sind in axialer Richtung A durch eine über den gesamten Umfang des Fahrzeugluftreifens erstreckte und in Umfangsrichtung U ausgerichtete Umfangsrille 6 voneinander beabstandet. Die Profilblockreihe 2 und die Umfangsrippe 3 sind in axialer Richtung A des Fahrzeugluftreifens durch eine über den gesamten Umfang des Fahrzeugluftreifens erstreckte und in Umfangsrichtung U ausgerichtete Umfangsrille 7 voneinander beabstandet. Die Umfangsrippe 3 und die Umfangsrippe 4 sind in axialer Richtung A des Fahrzeugluftreifens durch eine über den gesamten Umfang des Fahrzeugluftreifens erstreckte und in Umfangsrichtung U ausgerichtete Umfangsrille 8, voneinander beabstandet. Die Umfangsrippe 4 und die Umfangsrippe 5 sind in axialer Richtung A des Fahrzeugluftreifens durch eine über den gesamten Umfang des Fahrzeugluftreifens erstreckte und in Umfangsrichtung U ausgerichtete Umfangsrille 9 voneinander beabstandet ausgebildet. Die Umfangsrippen 1, 3, 4 und 5 sind jeweils über den gesamten Umfang des Fahrzeugluftreifens erstreckt und in Umfangsrichtung U des Fahrzeugluftreifens ausgerichtet. Die Profilblockreihe 2 ist in bekannter Weise aus über den Umfang des Fahrzeugluftreifens verteilten und in Umfangsrichtung U jeweils durch Querrillen 11 voneinander getrennten Profilblockelementen 10 ausgebildet. Die Querrillen 11 erstrecken sich dabei ausgehend von der Umfangsrille 7 in axialer Richtung A des Fahrzeugluftreifens durch die Profilblockreihe 2 hindurch und münden in die Umfangsrillen 6. Die Umfangsrippe 1 und die Umfangsrippe 5 sind jeweils in den Reifenschultern des Fahrzeugluftreifens angeordnet und bilden Schulterumfangsrippen. Die Profilblockreihe 2, die Umfangsrippen 3 und 4 sind in axialer Richtung A zwischen den beiden in den Reifenschultern ausgebildeten Umfangsrippen 1 und 5 angeordnet ausgebildet.

Wie in Fig. 1 dargestellt ist, erstreckt sich die Bodenaufstandsbreite T_{A} des Fahrzeugluftreifens - gemessen bei Normaldruck des Reifens im Betriebszustand unter Normbelastung. - ausgehend von einer axialen Position innerhalb des axialen Erstreckungsbereich der Umfangsrippe 5 hinein.

Im dargestellten Ausführungsbeispiel ist die Umfangsrippe 1 an derjenigen Reifenschulter ausgebildet, welche im montierten Zustand am Fahrzeug zu der vom Fahrzeug wegweisenden Außenseite OU weist. Die Umfangsrippe 5 ist an derjenigen Reifenschulter ausgebildet, welche im montierten Zustand am Fahrzeug zu der zum Fahrzeug hinweisenden Innenseite IN hinweist.

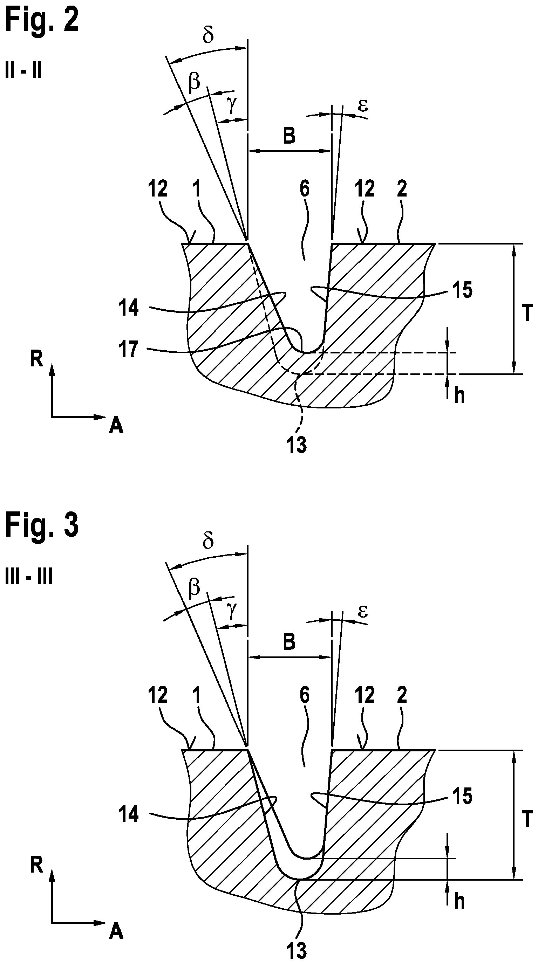

Wie in den Figuren 2, 3, 4 und 5 am Beispiel der Umfangsrippe 1 und der Profilblockreihe 2 dargestellt ist, werden die Umfangsrippe 1, 3, 4 und 5 sowie die Profilblockreihe 2 in radialer Richtung R des Fahrzeugluftreifens nach außen hin jeweils von einer radial äußeren Oberfläche 12 begrenzt, welche im Erstreckungsbereich der Bodenaufstandsbreite T_{A} die den Bodenkontakt bildende Mantelfläche des Reifens bildet.

Die Umfangsrillen 6, 7, 8 und 9 werden in radialer Richtung R des Fahrzeugluftreifens nach innen hin - wie am Beispiel der Umfangsrille 6 in den Figuren 2 bis 5 dargestellt ist - durch einen Rillengrund 13 begrenzt. Beiderseits des Rillengrundes 13 werden die Umfangsrillen 6, 7, 8 und 9 jeweils in axialer Richtung A des Fahrzeugluftreifens durch eine Rillenwand begrenzt, die durch die zur jeweiligen Umfangsrille hinweisende Flanke der diese Umfangsrille begrenzenden Umfangsrippe bzw. Profilblockreihe gebildet wird.

Wie in den Figuren 2 bis 4 dargestellt ist, ist die Umfangsrippe 1 zur Umfangsrille 6 hin durch eine Rippenflanke 15 begrenzt, welche sich in radialer Richtung R des Fahrzeugluftreifens ausgehend vom Rillengrund 13 der Umfangsrille 6 nach außen bis zur radial äußeren Oberfläche 12 der Umfangsrippe 1 erstreckt. Ebenso sind - wie in den Figuren 2,3 und 5 dargestellt ist, - die Profilblockelemente 12 der Profilblockreihe 2 in axialer Richtung A zur Umfangsrille 6 hin durch Flanken 15 begrenzt, welche sich in radialer Richtung R ausgehend vom Rillengrund 13 nach außen bis zu der das jeweilige Profilblockelement 10 der Profilblockreihe 2 begrenzenden radial äußeren Oberfläche 12 erstreckt.

Die Flanke 14 bildet dabei die zur Umfangsrippe 1 hin die Umfangsrille 6 begrenzende Rillenwand. Die Flanke 15 der Profilblockelemente 10 bildet die andere zur Profilblockreihe 2 hin die Umfangsrille 6 begrenzende Rillenwand.

In analoger Weise sind auch die Querrillen 11, welche jeweils zwei in Umfangsrichtung U des Fahrzeugluftreifens benachbarte angeordnete Profilblockelemente 10 der Profilblockreihe 2 voneinander trennen, in radialer Richtung R des Fahrzeugluftreifens nach innen hin durch einen Rillengrund und beiderseits des Rillengrundes in bekannter Weise jeweils durch eine das jeweilige Profilblockelement zur Querrille hin begrenzende Profilblockelementflanke begrenzt, welche j eweils die die Querrille zum Profilblockelement hin begrenzende Rillenwand bildet.

Die Profilblockelemente 10 der Profilblockreihe 2 sind in Drehrichtung D des Fahrzeugluftreifens bei Vorwärtsfahrt durch eine an ihrem hinteren Erstreckungsende 18 gebildete Flanke zur nachfolgenden Querrille 11 hin und durch eine an ihrem vorderen Erstreckungsende 19 gebildete Flanke zur vorgeordneten Querrille 11 hin begrenzt.

Wie in den Figuren 2 bis 5 dargestellt ist, ist die Umfangsrille 6 in radialer Richtung R längs ihrer Erstreckung in Umfangsrichtung mit einer Rillentiefe T ausgebildet, welche die Profiltiefe bildet und sich ausgehend von der radial äußeren Oberfläche 12 der Umfangrippe 1 bzw. der Profilblockreihe 2 in radialer Richtung R nach innen hin bis zum tiefsten Punkt des Rillengrundes erstreckt.

Wie in Fig. 1 zu erkennen ist, sind längs der Erstreckung der Umfangsrille 6 über den Umfang des Fahrzeugluftreifens hinweg im Rillengrund 13 der Umfangsrille 6 in alternierender Abfolge und mit Abstand zu einander hintereinander angeordnet stegförmige Erhebungen 16 und 17 ausgebildet, welche sich ausgehend von der Flanke 14 unter Einschluss eines Neigungswinkels α zur axialen Richtung A durch die Umfangsrille 6 hindurch bis zur Flanke 15 der Profilblockreihe 2 hindurch erstreckt.

Der Neigungswinkel α ist mit 15° ≤ α ≤ 45°, im dargestellten Ausführungsbeispiel jeweils mit α = 30° ausgebildet.

Die stegförmigen Erhebungen 16 und 17 sind jeweils in radialer Richtung R nach außen hinausgehend von der tiefsten Stelle des Rillengrundes 13 bis in eine Erstreckungshöhe h nach radial außen erstreckt mit h ≤ (0,5 T_{A}).

Die Tiefe T ist mit 5mm ≤ T ≤ 9mm gewählt ausgebildet. Die Erstreckungshöhe h ist mit h ≥ 1mm gewählt ausgebildet.

Im dargestellten Ausführungsbeispiel ist h mit h = 1,2mm gewählt ausgebildet

Die Erhebungen 16 und 17 werden in Umfangsrichtung U des Fahrzeugluftreifens jeweils durch eine Stegwand begrenzt, welche sich in radialer Richtung R des Fahrzeugluftreifens ausgehend vom Rillengrund 13 bis zur radial äußeren Oberfläche der stegförmigen Erhebung erstreckt. Die beiden, die stegförmige Erhebung Stegwände sind dabei parallel zueinander unter Einschluss des Neigungswinkels α erstreckt ausgerichtet. Die stegförmigen Erhebungen 16 und 17 sind in Umfangsrichtung U jeweils mit einer Erstreckungslänge L mit 3mm ≤ L ≤ 15mm ausgebildet, welche an ihrer radial äußeren Oberfläche, welche die stegförmige Erhebung nach radial außen hin begrenzt, gemessen wird.

Im dargestellten Ausführungsbeispiel ist L = 10mm gewählt.

Wie in Fig. 1 zu erkennen ist, sind die stegförmigen Erhebungen 16 längs ihrer Erstreckung ausgehend von der Flanke 14 der Umfangsrippe 1 durch die Umfangsrille 6 hindurch bis zur Flanke 15 der Profilelementreihe 2 jeweils mit einer entgegengesetzten Richtungskomponente in Umfangsrichtung U ausgebildet wie die stegförmigen Erhebungen 17. Die stegförmigen Erhebungen 16 und 17 sind somit zwar jeweils mit dem Neigungswinkel α geneigt ausgerichtet, jedoch mit einer entgegengesetzter Neigungsrichtung.

Wie in Fig. 1 zu erkennen ist, ist dabei zu jedem Profilblockelement 12 der Profilblockreihe 2 jeweils genau ein Paar bestehend aus einer stegförmigen Erhebung 16 und einer stegförmigen Erhebung 17 korrespondierend zugeordnet. Dabei ist die stegförmige Erhebung 16 im Erstreckungsbereich der Flanke 15 an dem in Drehrichtung D des Fahrzeugluftreifens des Profilblockelements 10 hinteren, durch eine nachfolgende Querrille begrenzenden Erstreckungsende 18 des Profilblockelementes 10 ausgebildet. Die stegförmige Erhebung 17 ist im Erstreckungsbereich der Flanke 15 an dem in Drehrichtung D des Fahrzeugluftreifens des Profilblockelements 10 vorderen, durch ein vorgeordnete Querrille begrenzenden Erstreckungsende 19 des Profilblockelementes 10 ausgebildet. Die beiden einem Profilblockelement 10 zugeordneten stegförmigen Erhebungen 16 und 17 sind dabei mit ihren Neigungsrichtungen unter Einschluss des Neigungswinkels α zur axialen Richtung A derart gewählt ausgebildet, dass ihre Erstreckungsrichtungen j eweils ausgehend von der Flanke 14 der Umfangrippe 1 in Richtung der Flanke 15 der Profilblockreihe 2 hin in ihrer Verlängerung ihrer Erstreckungsrichtung über die Flanke 15 hinaus sich schneiden.

Die Neigungsrichtung der stegförmigen Erhebung 16 und die Neigungsrichtung der stegförmigen Erhebung 17 ist dabei so gewählt, dass die jeweilige Erhebung 16 bzw. 17 jeweils ausgehend von ihrer Schnittstelle mit der Profilbandflanke 15 des ihnen zugeordneten Profilblockelementes 10 längs ihrer Erstreckung durch die Umfangsrille 6 hindurch bis zur Umfangsrippe 1 mit ihrer Umfangsrichtungskomponente in Richtung der nächstgelegenen Querrille 11 der Profilblockreihe 2 ausgerichtet ist.

Wie in Fig. 1 zu erkennen ist, ist dabei jede Querrille 11 der Profilblockreihe 2 an ihrer Mündungsstelle in die Umfangsrille 6 jeweils in Umfangsrichtung U des Fahrzeugluftreifens zwischen zwei eng benachbarten stegförmigen Erhebungen 16 und 17 angeordnet und mündet der Flanke 15 in die Umfangsrille 6 und somit an der axialen Position, in der der in Umfangsrichtung U gemessene Abstandes zwischen diese beiden Erhebungen 16 und 17 am größten ist.

Die Umfangsrille 6 ist längs ihrer Erstreckung in Umfangsrichtung U in der radialen Position an der radial äußeren Oberfläche 12 der angrenzenden Umfangsrippe 1 bzw. der Profilblockreihe 2 mit einer in axialer Richtung A des Fahrzeugluftreifens gemessenen Breite B ausgebildet. Die Flanke 15 der Profilblockreihe 2 erstreckt sich in den Schnittebenen, welche die Reifenachse beinhalten, in radialer Richtung R des Fahrzeugluftreifens ausgehend vom Rillengrund 13 nach radial außen längs ihrer radialen Erstreckung unter Einschluss eines Neigungswinkels ε zur radialen Richtung R des Fahrzeugluftreifens zur Reifenschulter IN hin geneigt.

In den Umfangserstreckungsabschnitten 20 zwischen zwei in Umfangsrichtung U hintereinander angeordneten radialen Erhebungen 16 und 17 ist die Flanke 14 jeweils in den Schnittebenen, welche die Reifenachse beinhalten, unter Einschluss eines Neigungswinkels γ zur radialen Richtung R zur Reifenschulter OU hin geneigt erstreckt ausgebildet. In den Umfangserstreckungsabschnitten 21, welche sich ausgehend von den Erhebungen 16 bzw. 17 in der Flanke 14 in radialer Richtung R des Fahrzeugluftreifens nach außen hin erstrecken ist die Flanke 14 jeweils in den Schnittebenen, welche die Reifenachse beinhalten, unter Einschluss eines Neigungswinkels δ zur radialen Richtung R zur Reifenschulter OU hin geneigt erstreckt ausgebildet mit δ > γ > ε.

Dabei ist β, welcher den Differenzwinkel β = (δ - γ) angibt, mit 5° ≤ β ≤ 20° gewählt ausgebildet. Beispielsweise ist β = 10° gewählt.

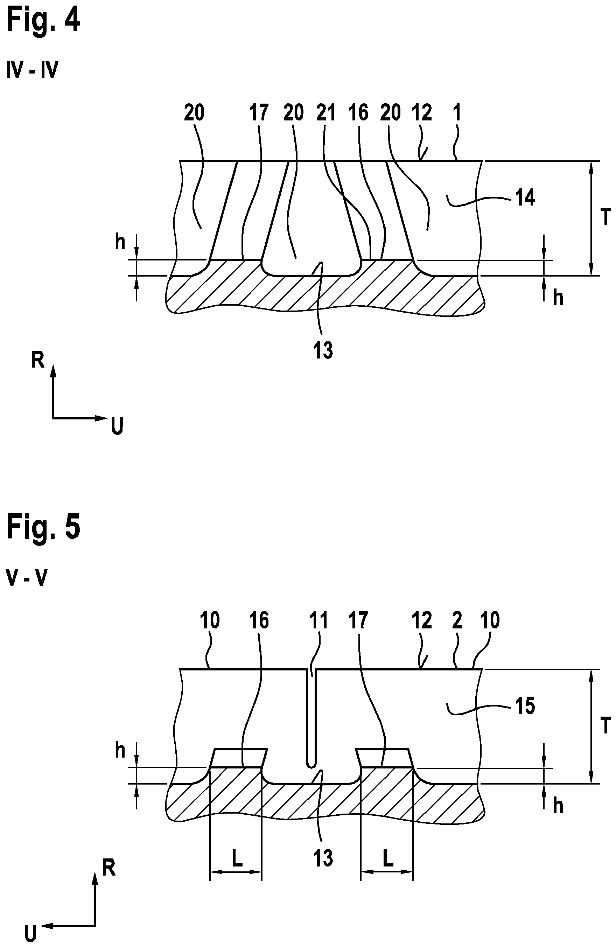

in einem Ausführungsbeispiel erstrecken sich die Erstreckungsbereiche 21 - wie in Fig. 4 dargestellt ist - jeweils ausgehend von den Erhebungen 16 und 17 mit einer in Umfangsrichtung U gemessenen Erstreckungslänge L in radialer Richtung R nach außen hin jeweils unter Einschluss eines Neigungswinkels λ zur radialen Richtung R mit endgegengesetzter Umfangsrichtungskomponente ihrer Neigungsrichtung, wobei λ mit 0° ≤ λ ≤ 10° gewählt ist. Dabei ist die Umfangsrichtungskomponente der Neigung gleich gerichtet zur Umfangsrichtungskomponente der Erstreckungsrichtung der zugehörigen stegförmigen Erhebung 16 bzw. 17 von Flanke 15 zur Flanke 16.

Die Breite B der Umfangsrille 6 ist mit 3mm≤B≤10mm, beispielsweise mit B=4mm ausgebildet

Die Breite B der Umfangsrille 6 ist kleiner gewählt als die Breite B₇ und B₈ der weiter zur Fahrzeugreifenmitte hin ausgebildeten Umfangsrillen 7 und 8.

Im dargestellten Ausführungsbeispiel ist die Breite B der zur Außenschulter OU hin ausgebildeten Umfangsrille 6 schmaler ausgebildet als die Breiten B₇, B₈ und B₉ aller anderen Umfangsrillen 7.8 und 9 des Fahrzeugluftreifens.

### Bezugszeichenliste

- 1: Umfangsrippe
- 2: Blockreihe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 10: Profilblockelement
- 11: Querrille
- 12: Radial äußere Oberfläche
- 13: Rillengrund
- 14: Flanke
- 15: Flanke
- 16: Erhebung
- 17: Erhebung
- 18: Blockanfang
- 19: Blockende

## Patentansprüche

1. Laufstreifenprofil eines Fahrzeugreifens mit über den gesamten Umfangs des Fahrzeugluftreifens erstreckten und in Umfangsrichtung U des Fahrzeugluftreifens ausgerichteten Profilbändern (1,2,3,4,5), wobei ein Profilband (1) in einer Reifenschulter und in axialer Richtung A zur Reifenmitte hin benachbart ein weiteres Profilband (2) ausgebildet ist, die durch eine Umfangsrille (6) voneinander getrennt sind, wobei die Umfangsrille (6) in radialer Richtung R nach innen hin von einem Rillengrund (13) und die Profilbänder (1,2,3,4,5) in radialer Richtung R nach außen hin von einer radial äußeren Oberfläche (12), welche die Bodenkontaktfläche bildet, und in axialer Richtung A zur Umfangsrille (6) jeweils durch eine Profilbandflanke (14,15), die sich ausgehend vom Rillengrund (13) in radialer Richtung R nach außen bis zur radial äußeren Oberfläche (12) erstreckt und die zum Profilband (1,2) hinweisende Rillenwand der Umfangsrille (6) bildet, begrenzt sind,
wobei längs der Erstreckung der Umfangsrille (6) über den Umfang des Fahrzeugluftreifens hinweg verteilt angeordnet im Rillengrund (13) der Umfangsrille (6) erste (16) und zweite (17) Erhebungen des Rillengrundes (13) ausgebildet sind, die sich quer zur Umfangsrille (6) hinweg erstrecken und dabei die beiden Profilbänder (1,2) verbinden, wobei die Erhebungen (16,17) längs ihrer Erstreckung durch die Umfangsrille (6) hinweg einen Neigungswinkel α zur axialen Richtung A einschließen, wobei erste (16) in der Umfangsrille (6) ausgebildete Erhebungen eine entgegengesetzte Steigungsrichtung zu zweiten (17) in der Umfangsrille (6) ausgebildeten Erhebungen aufweisen,
**dadurch gekennzeichnet,**
**dass** das in der Reifenschulter ausgebildete Profilband (1) eine Umfangsrippe und das zur Reifenmitte hin benachbarte Profilband (2) eine aus über den Umfang des Fahrzeugluftreifens hintereinander angeordneten und durch Querrillen (11) voneinander getrennten Profilblockelementen (10) ausgebildete Profilblockreihe ist,
**dass** längs der Erstreckung eines Profilblockes (10) in der Umfangsrille (6) je eine erste (16) und eine zweite (17) Erhebung ausgebildet ist, wobei jeweils eine erste Erhebung (16) das in Drehrichtung D des Fahrzeugreifens bei Vorwärtsfahrt ausgebildete Blockende (18) und die zweite Erhebung (17) den Blockanfang (19) mit der Umfangsrippe (1) verbindet.

2. Laufstreifenprofil gemäß den Merkmalen von Anspruch 1,
wobei die Neigungsrichtung der ersten Erhebung (16) und die Neigungsrichtung der zweiten Erhebung (17) jeweils derart gewählt sind, dass die Erhebung (16,17) jeweils ausgehend von ihrer Schnittstelle mit der Profilbandflanke (15) im Blockelement (10) längs der Erstreckung durch die Umfangsrille (6) hindurch bis zur Umfangsrippe (1) mit ihrer Umfangsrichtungskomponente in Richtung der der Schnittstelle im Profilblockelement (10) nächstgelegenen Querrille (11) der Profilblockreihe (2) ausgerichtet ist.

3. Laufstreifenprofil gemäß den Merkmalen von Anspruch 1 oder 2,
wobei die ersten (!6) und zweiten (17) Erhebungen mit einer vom Rillengrund (13) in radialer Richtung R nach außen gemessenen Erstreckungshöhe h mit h ≤ 0,5T ausgebildet ist, wobei T die in der Umfangsrille (6) gemessene Profiltiefe des Fahrzeugreifens bildet,
wobei insbesondere T mit 5mm≤T≤9mm ausgebildet ist.

4. Laufstreifenprofil gemäß den Merkmalen von einem der vorangegangenen Ansprüche,
wobei die Umfangsrille (6) mit einer in der radialen Position der radial äußeren Oberfläche (12) der sie begrenzenden Profilbänder (1,2) in axialer Richtung A des Fahrzeugreifens gemessenen Breite B ausgebildet ist, die schmaler ist als die Breite aller weiter zur Mitte des Reifens hin positioniert ausgebildeter - insbesondere aller anderen im Laufstreifenprofil ausgebildeten - Umfangsrillen (7,8).

5. Laufstreifenprofil gemäß den Merkmalen von einem der vorangegangenen Ansprüche,
wobei die Umfangsrille (6) mit einer in der radialen Position der radial äußeren Oberfläche (12) der sie begrenzenden Profilbänder (1,2) mit einer in axialer Richtung A des Fahrzeugreifens gemessenen Breite B mit 3mm≤B≤10mm ausgebildet ist.

6. Laufstreifenprofil gemäß den Merkmalen von einem der vorangegangenen Ansprüche,
wobei α mit 15°≤α≤45° ausgebildet ist.

7. Laufstreifenprofil gemäß den Merkmalen von einem der vorangegangenen Ansprüche,
wobei die ersten (!6) und zweiten (17) Erhebungen jeweils mit einer in Umfangsrichtung U des Fahrzeugluftreifens gemessenen maximalen Erstreckungslänge L mit 3mm≤L≤15mm ausgebildet sind.

8. Laufstreifenprofil gemäß den Merkmalen von einem der vorangegangenen Ansprüche,
wobei die zur Umfangrippe (1) weisende Rillenwand, welche durch die zur Umfangsrille (6) weisende Flanke (14) der Umfangsrippe (1) gebildet wird, jeweils in Erstreckungsrichtung der Umfangsrille (6) erstreckten ersten Erstreckungsabschnitten (21), welche längs der radialen Erstreckung der Rillenwand ausgehend von der Erhebung (16,17) bis zur radial äußeren Oberfläche (12) der Umfangsrippe (1) erstreckt ausgebildet sind, in den Schnittebenen, welche die Reifenachse aufweisen, jeweils mit einem ersten Neigungswinkel δ zur radialen Richtung R ausgebildet ist,
wobei in den in Umfangsrichtung U zwischen zwei hintereinander angeordneten, benachbarten ersten Erstreckungsabschnitten (21) die Rillenwand in den Schnittebenen, welche die Reifenachse aufweisen, längs ihrer radialen Erstreckung vom Rillengrund (13) bis zur radial äußeren Oberfläche (12) der Umfangsrippe (1) mit einem zweiten Neigungswinkel γ zur radialen Richtung R ausgebildet ist mit γ <δ, wobei der Differenzwinkel β = (δ-γ) mit 5°≤β≤20° gewählt ist.

9. Laufstreifenprofil gemäß den Merkmalen von einem der vorangegangenen Ansprüche,
wobei die zur Profilblockreihe (2) weisende Rillenwand, welche durch die zur Umfangsrille (6) weisende Flanke (15) der Profilblockreihe gebildet wird, längs ihrer Erstreckung über den Umfang des Fahrzeugreifens hinweg in den Schnittebenen, welche die Reifenachse aufweisen, längs ihrer radialen Erstreckung vom Rillengrund (13) nach außen mit einem Neigungswinkel ε zur radialen Richtung R ausgebildet ist.

## Claims

1. Tread profile of a vehicle tyre having profile bands (1, 2, 3, 4, 5) which extend over the entire circumference of the pneumatic vehicle tyre and are aligned in the circumferential direction U of the pneumatic vehicle tyre, wherein one profile band (1) is formed in a tyre shoulder, and a further profile band (2) is formed so as to be adjacent in the axial direction A towards the tyre centre, said profile bands (1, 2) being separated by a circumferential groove (6), wherein the circumferential groove (6) in the radial direction R is inwardly delimited by a groove base (13), and the profile bands (1, 2, 3, 4, 5) in the radial direction R are outwardly delimited by a radially outer surface (12) which forms the ground contact area, and in the axial direction A towards the circumferential groove (6) are in each case delimited by a profile band flank (14, 15) which, proceeding from the groove base (13), extends in the radial direction R outwards up to the radially outer surface (12) and forms the groove wall of the circumferential groove (6) that points towards the profile band (1, 2);
wherein first (16) and second (17) elevations of the groove base (13) which extend transversely to the circumferential groove (6) and thereby connect the two profile bands (1, 2) are formed along the extent of the circumferential groove (6) and disposed so as to be distributed over the circumference of the pneumatic vehicle tyre in the groove base (13) of the circumferential groove (6), wherein the elevations (16, 17) along their extent through the circumferential groove (6) enclose an inclination angle α in relation to the axial direction A, wherein first (16) elevations which are formed in the circumferential groove (6) have a direction of ascent which is opposite that of second (17) elevations which are formed in the circumferential groove (6),
**characterized in that**
the profile band (1) which is formed in the tyre shoulder is a circumferential rib, and the profile band (2) which is adjacent towards the tyre centre is a row of profile blocks which is formed from profile block elements (10) which are disposed behind one another over the circumference of the pneumatic vehicle tyre and are mutually separated by transverse grooves (11),
along the extent of a profile block (10) a first (16) elevation and a second (17) elevation are in each case formed in the circumferential groove (6), wherein a first elevation (16) connects the end of the block (18), formed in the direction of rotation D of the vehicle tyre during forward travel, and the second elevation (17) connects the beginning of the block (19) to the circumferential rib (1), respectively.

2. Tread profile according to the features of Claim 1,
wherein the inclination direction of the first elevation (16) and the inclination direction of the second elevation (17) are in each case chosen in such a manner that the elevation (16, 17), proceeding in each case from its intersection with the profile band flank (15) in the block element (10), along the extent through the circumferential groove (6) up to the circumferential rib (1), by way of its component in the circumferential direction is aligned in the direction of that transverse groove (11) of the row of profile blocks (2) that is closest to the intersection in the profile block element (10).

3. Tread profile according to the features of Claim 1 or 2,
wherein the first (16) and second (17) elevations are formed with a height h, where h ≤ 0.5T, measured in the radial direction R from the groove base (13) outwards, where T is the profile depth of the vehicle tyre measured in the circumferential groove (6);
wherein T is in particular formed with 5 mm ≤ T ≤ 9 mm.

4. Tread profile according to the features of one of the preceding claims, wherein the circumferential groove (6) is formed with a width B, which in the radial position of the radially outer surface (12) of the profile bands (1, 2) delimiting said circumferential groove (6) is measured in the axial direction A of the vehicle tyre and is narrower than the width of all circumferential grooves (7, 8) that are positioned further towards the centre of the tyre, in particular of all other circumferential grooves (7, 8) formed in the tread profile.

5. Tread profile according to the features of one of the preceding claims,
wherein the circumferential groove (6) is formed with a width B, which in the radial position of the radially outer surface (12) of the profile bands (1, 2) delimiting said circumferential groove (6) is measured with a in the axial direction A of the vehicle tyre and is 3 mm ≤ B ≤ 10 mm.

6. Tread profile according to the features of one of the preceding claims, wherein α is configured such that 15° ≤ α ≤ 45°.

7. Tread profile according to the features of one of the preceding claims, wherein the first (16) and the second (17) elevations are in each case formed with a maximum length of extent L of 3 mm ≤ L ≤ 15 mm, measured in the circumferential direction U of the pneumatic vehicle tyre.

8. Tread profile according to the features of one of the preceding claims, wherein the groove wall which points towards the circumferential rib (1) and is formed by that flank (14) of the circumferential rib (1) that points towards the circumferential groove (6), first extent portions (21) which each extend in the direction of extent of the circumferential groove (6) and along the radial extent of the groove wall, proceeding from the elevation (16, 17) to the radially outer surface (12) of the circumferential rib (1), is in each case formed with a first inclination angle δ in relation to the radial direction R in the section planes which comprise the tyre axis;
wherein the groove wall, in the between two adjacent first extent portions (21) which are disposed behind one another in the circumferential direction U, in the section planes which comprise the tyre axis, along the radial extent of said groove wall from the groove base (13) to the radially outer surface (12) of the circumferential rib (1) is formed with a second inclination angle γ in relation to the radial direction R, where γ < δ, wherein the difference angle β = (δ-γ) is chosen to be 5°≤ β ≤ 20°.

9. Tread profile according to the features of one of the preceding claims, wherein the groove wall which points towards the row of profile blocks (2) and is formed by that flank (15) of the row of profile blocks that points towards the circumferential groove (6), along its extent over the circumference of the vehicle tyre in the section planes which comprise the tyre axis, along the radial extent of said groove wall from the groove base (13) outwards is formed with an inclination angle ε in relation to the radial direction R.

## Revendications

1. Profil de bande de roulement d'un pneu de véhicule avec des bandes de profil (1, 2, 3, 4, 5) s'étendant sur toute la circonférence du pneu de véhicule et orientées dans la direction circonférentielle U du pneumatique de véhicule, une bande de profil (1) étant réalisée dans un épaulement du pneu et une autre bande de profil (2) étant réalisée dans la direction axiale A au voisinage du centre du pneu, lesquelles sont séparées l'une de l'autre par une rainure circonférentielle (6), la rainure circonférentielle (6) étant délimitée dans la direction radiale R vers l'intérieur par un fond de rainure (13) et les bandes de profil (1, 2, 3, 4, 5) étant délimitées dans la direction radiale R vers l'extérieur par une surface radialement extérieure (12) qui forme la surface de contact avec le sol, et dans la direction axiale A par rapport à la rainure circonférentielle (6), respectivement par un flanc de bande de profil (14, 15) qui s'étend à partir du fond de rainure (13) dans la direction radiale R vers l'extérieur jusqu'à la surface radialement extérieure (12) et qui forme la paroi de rainure de la rainure circonférentielle (6) orientée vers la bande de profil (1, 2),
le long de l'extension de la rainure circonférentielle (6), des premières (16) et des deuxièmes (17) saillies du fond de rainure (13) agencées réparties dans le fond de rainure (13) de la rainure circonférentielle (6), qui s'étendent transversalement à la rainure circonférentielle (6) et relient ainsi les deux bandes de profil (1, 2), étant réalisées sur la circonférence du pneumatique de véhicule, les saillies (16, 17) formant un angle d'inclinaison α par rapport à la direction axiale A le long de leur extension à travers la rainure circonférentielle (6), les premières saillies (16) réalisées dans la rainure circonférentielle (6) présentant une direction de pente opposée aux deuxièmes saillies (17) réalisées dans la rainure circonférentielle (6), **caractérisé**
**en ce que** la bande de profil (1) réalisée dans l'épaulement du pneu est une nervure périphérique et la bande de profil (2) voisine du centre du pneu est une rangée de blocs de profil réalisée à partir d'éléments de blocs de profil (10) agencés les uns derrière les autres sur la circonférence du pneumatique de véhicule et séparés les uns des autres par des rainures transversales (11),
**en ce que**, le long de l'extension d'un bloc de profil (10), une première (16) et une deuxième (17) saillies sont respectivement réalisées dans la rainure circonférentielle (6), une première saillie (16) reliant respectivement la fin de bloc (18) réalisée dans la direction de rotation D du pneu du véhicule en marche avant et la deuxième saillie (17) reliant le début de bloc (19) à la nervure circonférentielle (1).

2. Profil de bande de roulement selon les caractéristiques de la revendication 1,
la direction d'inclinaison de la première saillie (16) et la direction d'inclinaison de la deuxième saillie (17) étant respectivement choisies de telle sorte que la saillie (16, 17) est orientée avec sa composante de direction circonférentielle en direction de la rainure transversale (11) de la rangée de blocs de profil (2) la plus proche de l'interface dans l'élément de bloc de profil (10), en partant respectivement de son interface avec le flanc de bande de profil (15) dans l'élément de bloc (10), le long de l'extension à travers la rainure circonférentielle (6) jusqu'à la nervure circonférentielle (1).

3. Profil de bande de roulement selon les caractéristiques de la revendication 1 ou 2,
les premières (16) et deuxièmes (17) saillies étant réalisées avec une hauteur d'extension h mesurée depuis le fond de rainure (13) dans la direction radiale R vers l'extérieur, avec h ≤ 0,5T, T formant la profondeur de profil du pneu du véhicule mesurée dans la rainure circonférentielle (6),
T étant notamment réalisé avec 5 mm ≤ T ≤ 9 mm.

4. Profil de bande de roulement selon les caractéristiques de l'une quelconque des revendications précédentes,
la rainure circonférentielle (6) étant réalisée avec une largeur B, mesurée dans la position radiale de la surface radialement extérieure (12) des bandes de profil (1, 2) qui la délimitent dans la direction axiale A du pneu de véhicule, qui est plus étroite que la largeur de toutes les rainures circonférentielles (7, 8) réalisées en étant positionnées plus loin vers le centre du pneu - notamment toutes les autres rainures réalisées dans le profil de bande de roulement.

5. Profil de bande de roulement selon les caractéristiques de l'une quelconque des revendications précédentes,
la rainure circonférentielle (6) étant réalisée avec une largeur B, mesurée dans la direction axiale A du pneu de véhicule, avec 3 mm ≤ B ≤ 10 mm, dans la position radiale de la surface radialement extérieure (12) des bandes de profil (1, 2) qui la délimitent.

6. Profil de bande de roulement selon les caractéristiques de l'une quelconque des revendications précédentes,
α étant réalisé avec 15° ≤ α ≤ 45°.

7. Profil de bande de roulement selon les caractéristiques de l'une quelconque des revendications précédentes,
les premières (16) et deuxièmes (17) saillies étant réalisées respectivement avec une longueur d'extension maximale L, mesurée dans la direction circonférentielle U du pneumatique du véhicule, avec 3 mm ≤ L ≤ 15 mm.

8. Profil de bande de roulement selon les caractéristiques de l'une quelconque des revendications précédentes,
la paroi de rainure orientée vers la nervure circonférentielle (1), qui est formée par le flanc (14) de la nervure circonférentielle (1) orienté vers la rainure circonférentielle (6), avec respectivement des premières sections d'extension (21) s'étendant dans la direction d'extension de la rainure circonférentielle (6), qui sont réalisées en s'étendant le long de l'extension radiale de la paroi de rainure en partant de la saillie (16, 17) jusqu'à la surface radialement extérieure (12) de la nervure circonférentielle (1), étant réalisée dans les plans de coupe qui présentent l'axe du pneu respectivement avec un premier angle d'inclinaison δ par rapport à la direction radiale R,
dans la direction circonférentielle U entre deux premières sections d'extension (21) voisines agencées l'une derrière l'autre, la paroi de rainure étant réalisée dans les plans de coupe qui présente l'axe du pneu, le long de son extension radiale depuis le fond de rainure (13) jusqu'à la surface radialement extérieure (12) de la nervure circonférentielle (1), avec un deuxième angle d'inclinaison γ par rapport à la direction radiale R, avec γ < δ, l'angle différentiel β = (δ-γ) étant choisi avec 5° ≤ β ≤ 20°.

9. Profil de bande de roulement selon les caractéristiques de l'une quelconque des revendications précédentes,
la paroi de rainure orientée vers la rangée de blocs de profil (2), qui est formée par le flanc (15) de la rangée de blocs de profil orienté vers la rainure circonférentielle (6), étant réalisée le long de son extension sur la circonférence du pneu de véhicule dans les plans de coupe qui présentent l'axe du pneu, le long de son extension radiale depuis le fond de rainure (13) vers l'extérieur avec un angle d'inclinaison ε par rapport à la direction radiale R.
